Europäisches Patentamt

European Patent Office

Office européen des brevets

(19)

(11) Veröffentlichungsnummer: **0 301 213**
**A2**

(12) **EUROPÄISCHE PATENTANMELDUNG**

(21) Anmeldenummer: **88109341.3**

(22) Anmeldetag: **11.06.88**

(51) Int. Cl.4: **C10J 3/86 , C10K 1/04**

(30) Priorität: **28.07.87 DE 3724947**

(43) Veröffentlichungstag der Anmeldung:
**01.02.89 Patentblatt 89/05**

(84) Benannte Vertragsstaaten:
**DE ES GB GR NL**

(71) Anmelder: **Uhde GmbH**
**Friedrich-Uhde-Strasse 15 Postfach 262**
**D-4600 Dortmund 1(DE)**

(72) Erfinder: **Brandl, Adrian, Dipl.-Ing.**
**Himpendahlweg 1**
**D-4600 Durtmund 1(DE)**
Erfinder: **Schuster, Heinz-Georg, Dipl.-Ing.**
**Ordensweg 41**
**D-4600 Durtmund 12(DE)**
Erfinder: **Thiagarajan, Natarajan, Dr., Dipl.-Ing.**
**Bömckestrasse 25**
**D-4600 Durtmund 1(DE)**
Erfinder: **Hillebrand, Wolfgang, Dr., Dipl.-Ing.**
**Westendorfstrasse 6**
**D-4600 Dortmund 41(DE)**

(54) **Verfahren und Vorrichtung zum Kühlen von Rohgas aus einer partiellen Oxidation von kohlenstoffhaltigem Material.**

(57) Bei einem Verfahren zum Kühlen von Rohgas aus einer partiellen Oxidation von kohlenstoffhaltigem Material im Wirbelschichtverfahren, Festbettverfahren oder Flugbettverfahren bei Temperaturen oberhalb 700° C und Drücken von 1 bis 120 bar, wobei das kohlenstoffhaltige Material Kohle, Torf oder ein anderer kohlenstoffhaltiger Feststoff sein kann und das Oxidationsmittel Sauerstoff, Luft, Wasser und/oder ein anderer sauerstoffhaltiger Stoff ist, soll eine Lösung gefunden werden mit der die Verschmutzung und Zusetzung von nachgeschalteten Wärmetauschern vermieden wird. Dies wird dadurch erreicht, daß das Rohgas in einem nachgeschalteten Wirbelschicht-Kühler mit Zusatz-Feststoff auf Temperaturen von 100 bis 500° C direkt gekühlt wird.

FIG 1

EP 0 301 213 A2

## Verfahren und Vorrichtung zum Kühlen von Rohgas aus einer partiellen Oxidation von kohlenstoffhaltigem Material

Die Erfindung betrifft ein Verfahren und eine Vorrichtung zum Kühlen von Rohgas aus einer partiellen Oxidation von kohlenstoffhaltigem Material, welches Feststoff und/oder desublimierbare Dämpfe enthält.

Es ist bekannt, Kohle, Torf, flüssige und gasförmige Kohlenwasserstoffe und andere kohlenstoffhaltige Materialien durch partielle Oxidation, kurz Vergasung, mittels Sauerstoff, Luft oder mit Sauerstoff angereicherten Gasen in ein Rohgas, ein Gasgemisch, welches hauptsächlich Kohlenmonoxid, Wasserstoff, Kohlendioxid, Wasserdampf und gasförmige Kohlenwasserstoffe enthält, umzusetzen. Das Gasgemisch führt auch nicht reagierten Kohlenstoff, Schlacke oder Asche, verdampfte Salze und andere desublimierbare Dämpfe, wie Schwermetallverbindungen: V, Ni usw., mit sich. Die Vergasung findet, je nach Verfahren, bei Temperaturen zwischen 700 und 2000 °C und bei Drücken zwischen 1 und 120 bar statt.

Die herkömmlichen Vergasungsverfahren sind in Winnacker-Küchlers "Chemische Technologie" 4. Aufl., Band 5, Seite 262-264 und Seite 420-438 dargestellt.

Bei herkömmlichen Vergasungsverfahren wird das entstandene Rohgas abgekühlt und gereinigt. Um das Rohgas abzukühlen, werden mehrere Kühlungsvarianten angewendet: Abkühlen des Rohgases durch indirekten Wärmetausch in einem Gaskühler, um Dampf zu erzeugen oder andere Materialströme aufzuheizen und direktes Abkühlen des Rohgases durch Quenchen mit Wasser oder Rückführgas.

Die energetisch wertvollere indirekte Rohgaskühlung wird, je nach Austrittstemperatur und vergastem Material, unterschiedlich vorgenommen.

Bei der Kohle-Flugstromvergasung, mit Gasaustrittstemperaturen über dem Ascheschmelzpunkt, wird in einem sogenannten Strahlungskühler das Rohgas und die Schlacke bis unter die Schlackenerstarrungstemperatur von 700 bis 1000 °C, abgekühlt. Anschließend wird das feststoffbeladene Rohgas in einem sogenannten Konvektionskühler auf 200 bis 400 °C gekühlt. Beide Kühler leiden unter einer starken Verschmutzung durch Absetzen von Schlacke oder desublimierten Dämpfen.

Bei der Flugstromvergasung von Kohlenwasserstoffen, besonders bei schweren flüssigen Kohlenwasserstoffen entstehen außer den o.g. Rohgaskomponenten, Ruß und Schwermetallverbindungen. Das Rohgas wird von 1200-1400 °C in einem Kühler auf 200-400 °C abgekühlt. Die Kühlflächen sind einer starken Rußverschmutzung unterworfen. Zusätzlich werden die Kühlflächen durch die Abscheidung von Schwermetallverbindungen korrodiert.

Bei der Wirbelschicht-Vergasung von Kohle, Torf oder anderen kohlenstoffhaltigen und aschehaltigen Materialien wird ein Rohgas erzeugt, welches Asche und desublimierbare Dämpfe enthält. Das Rohgas mit einer Austrittstemperatur von 700 bis 1000 °C wird in einem Kühler auf 200-400 °C abgekühlt. Der Kühler ist einer starken Verschmutzung unterworfen durch Absetzen oder Anbacken von Feststoffen.

Bei der Verbrennung, d.h. vollständigen Oxidation von kohlenstoffhaltigem Material wie Kohle, Torf u.a. wird die Rohgaskühlung (oder Rauchgaskühlung) durch Dampferzeugung über dem Feuerraum oder, nach Teilabscheidung der Feststoffe, in einem nachgeschalteten Dampferzeuger vorgenommen. Die Dampferzeuger sind der Verschmutzung unterworfen, welche stark mit dem Salzgehalt des Einsatzmaterials ansteigt, so daß bei zu hohen Salzgehalten die Abhitzenutzung nicht mehr durchführbar ist.

Generell wird das indirekte Kühlen von Rohgasen durch eine stetige Verschmutzung der Kühlflächen gekennzeichnet welche zu Anlagenstörungen und -abschaltungen führt.

Die bekannten Mittel zur Minderung der Verschmutzungsfolgen wie Rußbläser, Klopfer, Beschallung oder Überdimensionieren der Heizflächen sind wenig erfolgreich. Besonders bei stark salzhaltigen Vergasungs-Einsatzstoffen sind die Gaskühlflächen in kürzester Zeit verschmutzt und die Gaswege verstopft.

Der Erfindung liegt die Aufgabe zugrunde, die bei der notwendigen Abkühlung der Rohgase auftretenden Schwierigkeiten der Verschmutzung von Kühlflächen weitgehend zu vermeiden.

Es wurde gefunden, daß die Aufgabe gelöst wird, wenn erfindungsgemäß das Rohgas in einem nachgeschalteten Wirbelschichtkühler mit Zusatz-Feststoff auf Temperaturen von 100 bis 500 °C direkt gekühlt wird. Im Rohgas enthaltene flüssige Verunreinigungen müssen vorher in feste Form überführt worden sein.

Nach Ausgestaltung der Erfindung wird das Verfahren gemäß den Unteransprüchen variiert, neu in Abhängigkeit des Vergasungswerkstoffes und der Oxidationstemperatur eine optimale Abkühlung des Rohgases zu erzielen, ohne daß es zu übermäßiger Verschmutzung der Wärmetauscherfläche kommt.

Die Vorrichtung zur Durchführung des Verfahrens zeichnet sich dadurch aus, daß der Wirbelschichtkühler aus einem von der Wirbelschicht umhüllten Rohrschlangensystem besteht, welches im inneren eines Druckbehälters angebracht ist, daß die Wirbelschicht sich über einem Verteilerboden ausbildet, welcher unter dem Rohrschlangensystem angeordnet ist, daß der Druckbehälter durch eine gekühlte Membranwand und/oder durch eine hitzebeständige Ausmauerung geschützt ist.

Die Ausgestaltung der Vorrichtung erfolgt gemäß den Merkmalen der Unteransprüche.

Der Zusatz-Feststoff kann sowohl ein artfremdes Material sein wie Sand, Tongestein usw., wie auch die aus dem Prozess ent standene Asche oder Schlacke. Die Wirbelschicht-Kühlung wird außerhalb des Vergasungsraumes durchgeführt.

Die erfindungsgemaße Ausführung der Wirbelschichtkühlung des Rohgases ermöglicht eine kontinuierliche und kontrollierte Selbstreinigung durch den in der Wirbelschicht befindlichen Feststoff. Zusätzlich sind die Wirbelschicht-Feststoffpartikel Desublimationszentren für Salz- und andere in dem Rohgas enthaltene Dämpfe. Durch Teilausschleusen der Wirbelschicht-Feststoffe können die Desublimationsprodukte aus dem Gasraum entfernt werden und somit wird die Belastung der nachgeschalteten Anlagen vermindert. Die Ausführung der direkten Kühlung in der Wirbelschicht ermoglicht auch eine erhebliche Verbesserung des Wärmeüberganges, durch den prinzipiell besseren Wärmeübergang von Wirbelschicht-Kühlung genüber der reinen Gaskonvektion und durch Verhindern des Aufbaus wärmedämmender Verschmutzungsschichten bei dem indirekten Wärmeübergang von der Wirbelschicht zu den Kühlmedien.

Ein anderer Vorteil ist die zusätzliche Trockenabscheidung von Flugasche aus dem gekühlten Rohgas, in dem für die Rückführung des Wirbelschicht-Feststoffes benötigten Rückführzyklon. Die Flugascheabscheidung mindert somit die Belastung der nachgeschalteten Anlagen.

Ein anderer Vorteil gegenüber den herkömmlichen Rauchrohr-Kühlern ist die Möglichkeit die in der Wirbelschicht befindlichen Kühlschlangen in unterschiedliche Temperaturzonen einzubringen und somit Dampf mit unterschiedlichen Druckstufen zu erzeugen oder zusätzlich zur Dampferzeugung, Reingas aus den nachgeschalteten Teilanlagen aufzuheizen oder Dampf zu überhitzen.

Bei der Vergasung von Kohle wird die aus dem Rohgas abgeschiedene Flugasche als Zusatzmaterial zur Zementerzeugung oder für Straßenbeläge verwendet. Somit kann ein anderer Vorteil der Wirbelschicht-Kühlung zustande kommen indem man als Zusatz-Feststoff für die Wirbelschicht Einsatzmaterial für Zementöfen oder Straßenbau verwendet. Der Zusatzfeststoff wird, nach gemeinsamer Ausschleusung mit der Flugasche, jeweils in der Zementindustrie oder im Straßenbau als Einsatzmaterial verwendet.

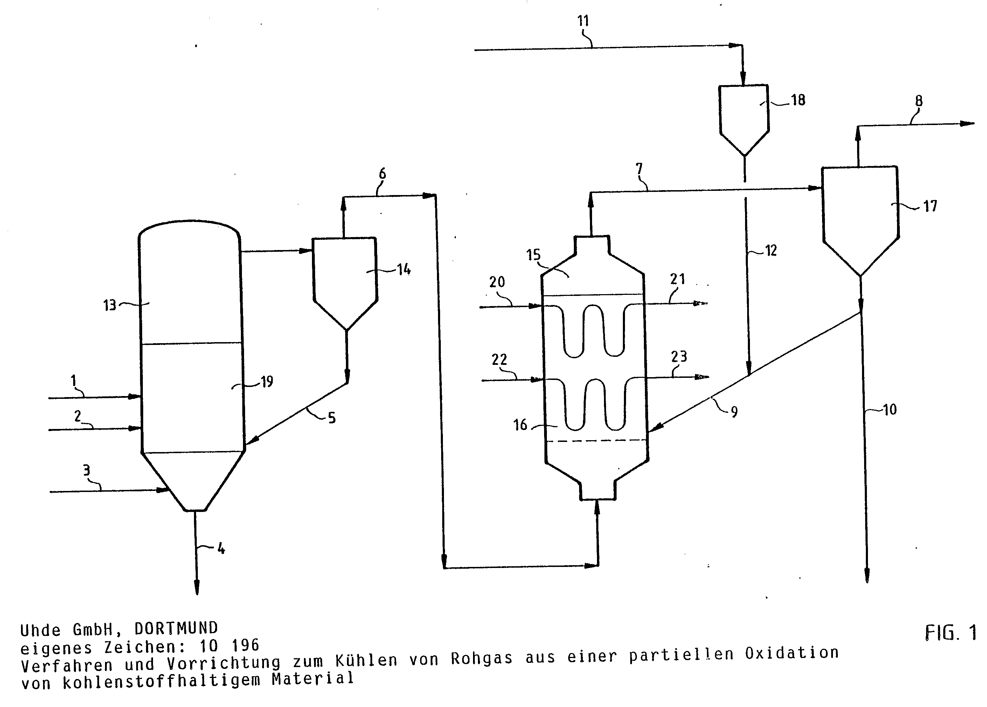

In einer Ausführung der Erfindung wird das erzeugte Rohgas aus einer Wirbelschicht-Kohlevergasung in einem nachgeschalteten Wirbelschicht-Kühler, gemäß Fig. 1, abgekühlt. Im Wirbelschicht-Kühler wird Hochdruck-Dampf und Niederdruck-Dampf erzeugt.

Der Wirbelschicht-Kohlevergasungsreaktor 13 wird mit Kohle 1 beschickt. Mittels Wasserdampf 3 und Sauerstoff oder Luft 2 wird eine Kohle-Wirbelschicht 19 erzeugt. Das entstandene Rohgas wird von mitgerissenen Asche- und Kohlepartikel im Zyklon 14 teilweise gereinigt. Die abgeschiedenen Feststoffe werden über die Leitung 5 in die Wirbelschicht zurückgeführt. Asche wird über die Leitung 4 aus dem Vergasungsreaktor abgezogen. Das teilentstaubte Rohgas wird mit einer Temperatur von 700 bis 1000 °C über die Leitung 6 in den Wirbelschicht-Kühler 15 geführt. Der Wirbelschicht-Kühler besteht aus einem Behälter mit Verteilerboden, über welchem sich eine Sand-Wirbelschicht 16 befindet. In der Wirbelschicht sind Kühlschlangen untergebracht, in welchen Kesselspeisewasser über Leitung 20 und 22 zu Hochdruck-Dampf über Leitung 23 von 40 bis 180 bar und zu Niederdruck-Dampf von 2 bis 10 bar über Leitung 21 verdampft wird. Das Wirbelmedium ist das heiße Rohgas, welches den Wirbelschichtkühler von unten nach oben durchströmt.

Das Rohgas wird auf ungefähr 200 bis 250 °C abgekühlt. Prozessbedingt kann die Kühlung auch nur bis 400 °C erfolgen. In diesem Fall würden die Kühlschlangen zur Niederdruck-Dampferzeugung entfallen.

Die Flugasche wird teilweise in die Wirbelschicht integriert, teilweise mit dem aus der Kühlzone austretenden Rohgas mitgerissen. Salz-Dämpfe werden, entsprechend ihrem Gleichgewichts-Partialdruck, auf den Feststoffen der Wirbelschicht desublimiert. Das gekühlte und feststoffbeladene Rohgas wird über die Leitung 7 in einem Zyklon 17 entstaubt und über die Leitung 8 den nachgeschalteten Teilanlagen zugeführt. Die im Zyklon abgeschiedenen Feststoffe, welche mit Desublimationsstoffen beladen sind, werden teilweise über Leitung 10 ausgeschleust, teilweise über Leitung 9 zurückgeführt. Die ausgeschleuste Sandmenge wird über Frisch-Sandzufuhr Leitung 11 und 12 aus einem Vorlagebehälter 18 dem System zugeführt.

Die ausgeschleusten Feststoffe können regeneriert werden in dem die Salze verdampft oder ausgewaschen werden.

In einer leicht geänderten Ausführung, welche besonders bei Kombikraftwerken mit integrierter Kohlevergasung sinnvoll ist, wird zwischen dem Hochdruckdampferzeuger und dem Niederdruck-Dampferzeuger ein drittes Rohgas-Kühlsystem eingesetzt, in welchem Hochdruck-Dampf überhitzt oder Gasturbinen-Brenngas aufgeheizt wird.

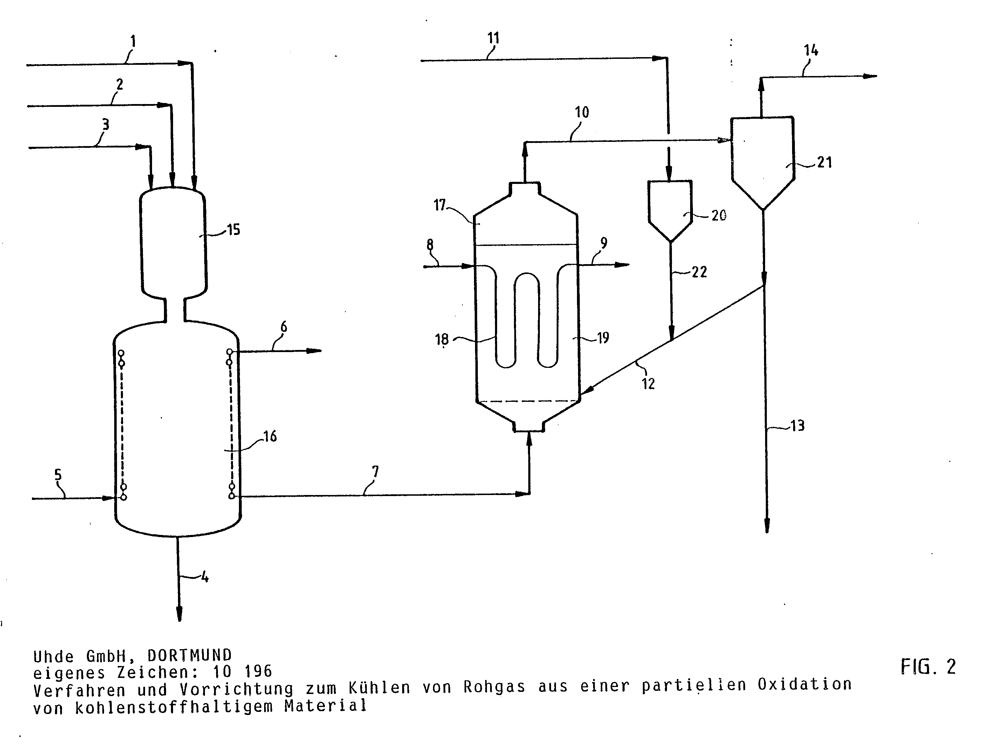

In einer anderen Ausführung der Erfindung, gemäß Fig. 2, wird das erzeugte Rohgas aus einer Flugstrom-Kohlevergasung oder Vergasung von Kohlenwasserstoffen in einem Strahlungskühler auf Temperaturen unter 1000 °C abgekühlt und anschließend in einem Wirbelschichtkühler weiter auf 200 bis 400 °C abgekühlt. Der Flugstrom-Vergasungsreaktor 15 wird mit Kohle oder Kohlenwasserstoffen über Leitung 1, Sauerstoff oder Luft über Leitung 2 und Wasserdampf oder Wasser über Leitung 3 beschickt, wobei Wasser und Kohle auch durch eine gemeinsame Leitung, als Suspension zugeführt werden können. Das bei 1200 bis 1500 °C entstandene Rohgas wird in einem Strahlungskühler 16 auf unter 1000 °C gekühlt mit gleichzeitiger Verdampfung von Kesselspeisewasser über Leitung 5 zu Hochdruck-Dampf in Leitung 6. Abgeschiedene Schlacke wird aus dem System über Leitung 4 ausgeschleust. Das unter 1000 °C gekühlte Rohgas wird einem Wirbelschicht-Kühler 17 über Leitung 7 zugeführt, welcher aus einem Druckbehälter und einem System von Rohrschlangen 18 besteht. Das Wirbelmedium ist das Rohgas, welches über einen Verteilerboden eine Wirbelschicht 19 aus Sand, Tongestein oder einem anderen Feststoff aufrecht erhält. Das Rohgas wird im Wirbelschicht-Kühler auf 200 bis 400 °C abgekühlt und dem Zyklon 21 über Leitung 10 zugeführt. Mitgerissener Sand und Schlacke oder Ruß werden im Zyklon abgeschieden. Das entstaubte und gekühlte Rohgas wird über Leitung 14 der Nachverarbeitung zugeführt. Die abgeschiedenen, mit Desublimationsprodukten beladenen Feststoffe werden teilweise dem System über Leitung 13 entzogen, teilweise ruckgeführt über Leitung 12. Frisch-Sand wird über die Leitung 11, 22 und dem Vorlagebehälter 20 dem System zugeführt. Im Falle einer Ausschleusung von Sand und Ruß, kann der Ruß mittels Wirbelschichtklassierung oder Naßdekantierung vom Sand getrennt und wiederverwendet werden. Wie bei der vorher beschriebenen Ausführung der Erfindung kann das Kühlsystem sowohl zur Hochdruck-Dampferzeugung dienen, wie auch zur zusätzlichen Hochdruck-Dampfüberhitzung, Reingasaufheizung und Niederdruck-Dampferzeugung verwendet werden.

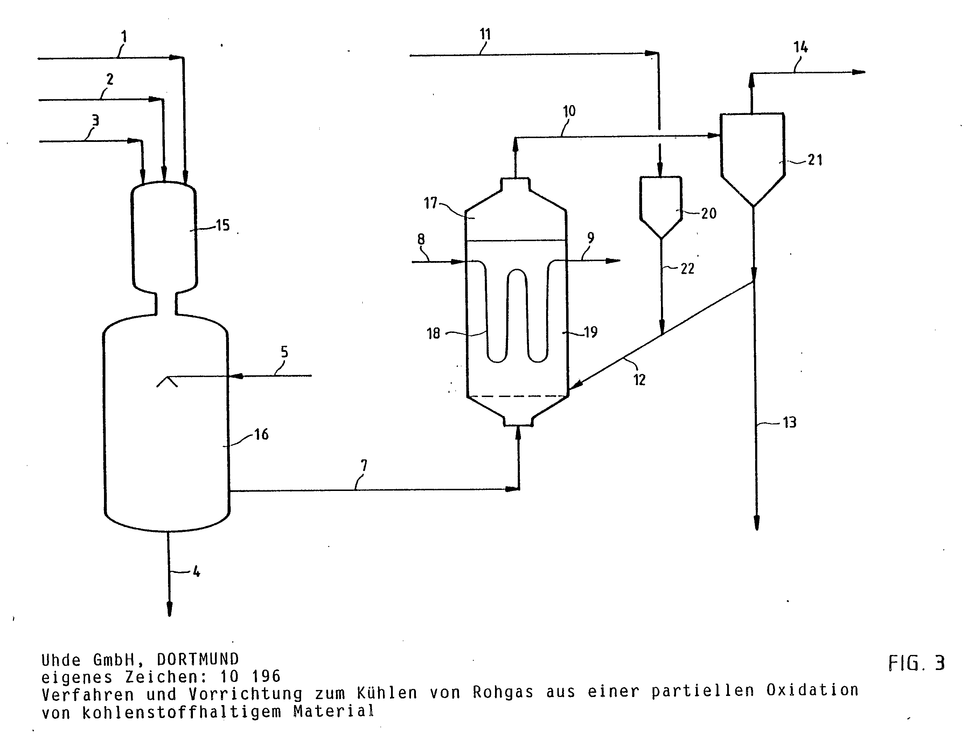

In einer anderen Ausführung der Erfindung, gemäß Fig. 3, wird das erzeugte Rohgas aus einer Flugstrom-Kohlevergasung oder Ölvergasung, mittels Sprühquench mit Wasser oder Quench mit rezirkuliertem Gas, auf unter 1000 °C abgekühlt und anschließend in einem Wirbelschichtkühler weiter auf 200 bis 400 °C gekühlt. Der Flugstrom-Vergasungsreaktor 15 wird mit Kohle oder Kohlenwasserstoffen über Leitung 1, Sauerstoff oder Luft über Leitung 2 und Wasserdampf oder Wasser über Leitung 3 beschickt, wobei Wasser und Kohle auch durch eine gemeinsame Leitung, als Suspension zugeführt werden können. Das bei 1200 bis 1500 °C entstandene Rohgas wird in einem nachgeschalteten Quenchbehälter 16 mittels Wasser-Sprühquench oder Quench mit rezirkuliertem Gas über Leitung 5 auf unter 1000 °C abgekühlt. Im Falle einer Vergasung von Kohlenwasserstoffen kann diese Zwischenkühlung sogar entfallen, falls entsprechende Feststoffe mit hohem Schmelzpunkt in dem nachgeschalteten Wirbelschicht-Kühler eingesetzt werden.

Das unter 1000 °C gekühlte Rohgas wird anschließend in dem Wirbelschicht-Kühler 17 nach demselben Verfahren abgekühlt wie die Ausführung gemäß Fig. 2.

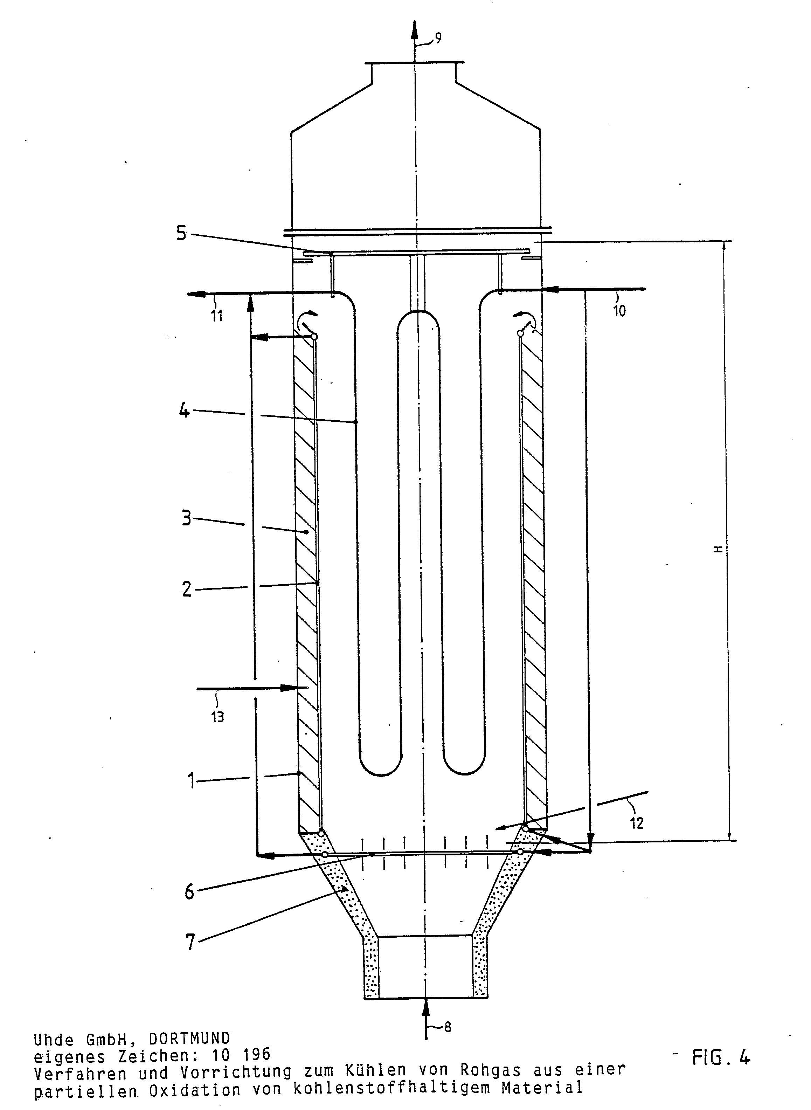

Eine mögliche Ausgestaltung der den Erfindungsgedanken zugrundeliegenden Vorrichtung ist der Fig. 4 zu entnehmen.

Der Wirbelschicht-Kühler besteht im wesentlichen aus einem Druckmantel 1, einer mantelseitigen Membranwand 2 und einem hängenden Rohrschlangensystem 4 im Raum, welcher von der Membranwand umschlossen wird.

Der Ringspalt zwischen Membranwand und Druckmantel ist mit einer Hinterisolierung 3 versehen und wird, bei leichter Durchströmung mit kaltem Sperrgas 13, vor Einbruch der heißen, schwefelhaltigen Gase geschützt.

Die konische Eintrittskammer ist mit hitzebeständiger Isolierung 7 ausgekleidet.

Das Rohrschlangensystem wird im oberen, kälteren Bereich von einem entsprechenden Aufhängungssystem 5 getragen und kann von oben ein- und ausgebaut werden.

Sowohl die Membranwand als auch das Rohrschlangensystem werden als Verdampfer mit Zwangsdurchlauf betrieben.

Die mit Feststoff im inneren der Membranwand aufgebaute Wirbelschicht, mit einer ungefähren Wirbelschichthöhe H, sichert sowohl eine gute Reinigung der Heizflächen als auch einen guten gasseitigen Wärmeübergang.

Der aus dem Kühler ausgetragene Feststoff wird rezirkuliert und ein Teil des salzbeladenen Feststoffes Sandes aus dem Zyklon ausgeschleust und durch frischen Feststoff ersetzt.

Aus konstruktiver Sicht können sowohl die Rohrschlangen von unterschiedlichen Kühlmedien durchströmt werden, wie auch mehrere Rohrschlangenpakete mit unterschiedlichen Kühlmedien in unterschiedlichen Höhen in der Wirbelschicht untergebracht werden. Somit kann Dampf mit unterschiedlichem Druckniveau erzeugt werden oder zusätzliche Dampf überhitzt oder Reingas im selben Wirbelschicht-Kühler aufgeheizt werden.

zu Fig. 4 Wirbelbett - Rogaskessel

1 - Druckmantel
2 - Membranwand
3 - Hinterisolierung
4 - Rohrschlangen
5 - Aufhängung für Rohrschlangen
6 - Verteilerrost
7 - Hitzebeständige Isolierung


**Ansprüche**

1. Verfahren zum Kühlen von Rohgas aus einer partiellen Oxidation von kohlenstoffhaltigem Material im Wirbelschichtverfahren oder Festbettverfahren, bei Temperaturen von 700 bis 1200 °C und Drücken von 1 bis 120 bar, wobei das kohlenstoffhaltige Material Kohle, Torf oder ein anderer kohlenstoffhaltiger Feststoff sein kann und das Oxidationsmittel Sauerstoff, Luft, Wasser und/oder ein anderer sauerstoffhaltiger Stoff ist, **dadurch gekennzeichnet,** daß das Rohgas in einem nachgeschalteten Wirbelschicht-Kuhler mit Zusatz-Feststoff auf Temperaturen von 100 bis 500 °C direkt gekühlt wird.

2. Verfahren zum Kühlen von Rohgas aus einer partiellen Oxidation von kohlenstoffhaltigem Material im Flugbettverfahren bei Temperaturen von 900 bis 1500 °C und Drücken von 1 bis 120 bar, wobei der Ascheschmelzpunkt nicht überschritten wird, wobei das kohlenstoffhaltige Material gas- oder flüssige Kohlenwasserstoffe oder ein anderes kohlenstoffhaltiges Material sein kann und das Oxidationsmittel Sauerstoff, Luft, Wasser und/oder ein anderer sauerstoffhaltiger Stoff ist, **dadurch gekennzeichnet,** daß das Rohgas in einem nachgeschalteten Wirbelschicht-Kühler mit Zusatz-Feststoff auf Temperaturen von 100 bis 500 °C direkt gekühlt wird.

3. Verfahren zum Kühlen von Rohgas aus einer partiellen Oxidation von kohlenstoffhaltigem Material im Flugbettverfahren, bei Temperaturen von 900 bis 2000 °C und Drücken von 1 bis 120 bar, wobei das kohlenstoffhaltige Material Kohle oder Kohle-Wasser-Suspension, Torf, gas- oder flüssige Kohlenwasserstoffe oder ein anderes kohlenstoffhaltiges Material sein kann und das Oxidationsmittel Sauerstoff, Luft, Wasser und/oder ein anderer sauerstoffhaltiger Stoff ist, **dadurch gekennzeichnet,** daß das Rohgas zuerst einer Tempera turabsenkung bis auf 100 °C unterhalb des Schlackenerstarrungspunktes unterworfen wird bevor es im nachgeschalteten Wirbelschicht-Kuhler mit Zusatz-Feststoff auf Temperaturen von 100 bis 500 °C .direkt gekühlt wird.

4. Verfahren nach Anspruch 3 **dadurch gekennzeichnet,** daß das Rohgas in einem Strahlungskühler zuerst einer Temperaturabsenkung bis auf 100 °C unterhalb des Schlackenerstarrungspunktes unterworfen wird bevor es im nachgeschalteten Wirbelschicht-Kühler mit Zusatzfeststoff auf Temperaturen von 100 bis 500 °C direkt gekühlt wird.

5. Verfahren nach Anspruch 3 **dadurch gekennzeichnet,** daß das Rohgas in einem Teilquench mit kaltem Gas oder in einem Teil-Sprühquench mit Wasser zuerst einer Temperaturabsenkung bis auf 100 °C unterhalb des Schlackenerstarrungspunktes unterworfen wird bevor es im nachgeschalteten Wirbelschicht-Kühler mit Zusatz-Feststoff auf Temperaturen von 100 bis 500 °C direkt gekühlt wird.

6. Verfahren nach den Ansprüchen 1 bis 5, **dadurch gekennzeichnet,** daß das Rohgas aus einer vollständigen Oxidation eines kohlenstoffhaltigen Materials entstanden ist.

7. Verfahren nach den Ansprüchen 1, 2, 3, 4, 5 oder 6, **dadurch gekennzeichnet,** daß die Wirbelschicht des Wirbelschichtkühlers aus artfremden Zusatz-Feststoffen wie Sand, Tongestein usw. besteht und aus dem Prozess entstandene Asche oder Schlacke enthält.

8. Verfahren nach den Ansprüchen 1 bis 7 **dadurch gekennzeichnet,** daß bei Lehrrohrgeschwindigkeiten im Wirbelschicht-Kühler von 0.1 bis 4 m/s, vorzugsweise 0.5 bis 1 m/s und entsprechender Korngröße des Zusatz-Feststoffes der maximale Wärmeübertragungseffekt an den Kühlerflächen erreicht wird.

9. Verfahren nach den Ansprüchen 1 bis 8 **dadurch gekennzeichnet,** daß durch Steuerung der Austritts-Temperatur des Wirbelschicht-Kühlers die Desublimationsprodukte aus dem Rohgas entfernt werden.

10. Verfahren nach den Ansprüchen 1 bis 9 **dadurch gekennzeichnet,** daß das Rohgas den Wirbelschicht-Kühler von unten nach oben durchströmt, das gekühlte und feststoffenthaltende Rohgas aus dem Wirbelschicht-Kühler in einem nachgeschaltetem Zyklon von den Feststoffen gereinigt wird und daß die abgeschiedenen Feststoffe teilweise rückgeführt werden.

11. Verfahren nach den Ansprüchen 1 bis 10 **dadurch gekennzeichnet,** daß die durch die Rohgas-Kühlung an die Wirbelschicht abgegebene Wärme sowohl zur indirekten Erzeugung von Dampf wie auch zur indirekten Überhitzung von Dampf und/oder zur indirekten Aufheizung von gereinigtem Rohgas und Kesselspeisewasser verwendet wird.

12. Verfahren nach den Ansprüchen 1 bis 19 **dadurch gekennzeichnet,** daß die indirekte Wärmeübertragung an die Kühlmittel in einer oder mehreren vertikal übereinander angeordneten Kühlungszonen erfolgt.

13. Vorrichtung zur Durchführung des Verfahrens nach den Ansprüchen 1 bis 12 **dadurch gekennzeichnet,** daß der Wirbelschichtkühler aus einem von der Wirbelschicht umhüllten Rohrschlangensystem besteht, welches im inneren eines Druckbehälters angebracht ist, daß die Wirbelschicht sich über einem Verteilerboden ausbildet, welcher unter dem Rohrschlangensystem angeordnet ist, daß der Druckbehälter durch eine gekühlte Membranwand und/oder durch eine hitzebeständige Ausmauerung geschützt ist.

14. Vorrichtung nach Anspruch 13 **dadurch gekennzeichnet,** daß die Zugabe von Feststoffen sowohl im Feststoff-Rückführrohr, wie auch durch ein gesondertes Rohr erfolgt.

15. Vorrichtung nach Anspruch 13 **dadurch gekennzeichnet,** daß das Feststoffzugabe- und Feststoffrückführungsrohr sowohl über dem Rohrschlangensystem wie auch unter dem Rohrschlangensystem durch den Druckmantel geführt wird.

16. Vorrichtung nach Anspruch 13, **dadurch gekennzeichnet,** daß die Rohrschlangen senkrecht, waagerecht, parallel zueinander oder zylindrisch angeordnet sind, daß die Rohrschlangen von Wasser, Dampf, Reingas oder anderen geeigneten wärmeübertragenden Medien durchströmt werden, daß die Zuleitungen and Ableitungen für die Rohrschlangen am oberen, kälteren Teil des Wirbelschichtkühlers zu- und abgeführt werden

17. Vorrichtung nach Anspruch 13 **dadurch gekennzeichnet,** daß der Verteilerboden aus Stahl, keramischen Werkstoffen oder Stahl mit keramischer Plattierung ausgeführt wird und daß der Verteilerboden gekühlt oder ungekühlt ist.

18. Vorrichtung nach Anspruch 13 **dadurch gekennzeichnet,** daß die Membranwand aus vertikalen oder spiralförmigen Kühlrohren besteht, welche durch eine Plattierung oder Stampfmasse geschützt werden und daß zwischen Membranwand und Druckmantel eine geeignete Isolierung vorgesehen ist.

19. Vorrichtung nach den Ansprüchen 13 und 18, **dadurch gekennzeichnet,** daß der Ringspalt zwischen Membranwand und Druckmantel mit einem Spülgas durchströmbar ist.

20. Vorrichtung nach Anspruch 13, **dadurch gekenneichnet,** daß der Druckmantel von außen gekühlt wird.

FIG. 1

EP 0 301 213 A2

Uhde GmbH, DORTMUND
eigenes Zeichen: 10 196
Verfahren und Vorrichtung zum Kühlen von Rohgas aus einer partiellen Oxidation
von kohlenstoffhaltigem Material

EP 0 301 213 A2

Uhde GmbH, DORTMUND
eigenes Zeichen: 10 196
Verfahren und Vorrichtung zum Kühlen von Rohgas aus einer partiellen Oxidation
von kohlenstoffhaltigem Material

FIG. 2

EP 0 301 213 A2

Uhde GmbH, DORTMUND
eigenes Zeichen: 10 196
Verfahren und Vorrichtung zum Kühlen von Rohgas aus einer partiellen Oxidation
von kohlenstoffhaltigem Material

FIG. 3

Uhde GmbH, DORTMUND
eigenes Zeichen: 10 196
Verfahren und Vorrichtung zum Kühlen von Rohgas aus einer
partiellen Oxidation von kohlenstoffhaltigem Material

FIG. 4